# EUROPEAN PATENT SPECIFICATION

(11) **EP 3 010 176 B1**
(45) Date of publication and mention of the grant of the patent: **07.10.2020**
(21) Application number: 14189436.0
(22) Date of filing: 17.10.2014
(51) Int. Cl.: H04L 9/32

(54) **Method and receiver entity for secure execution of software**
Verfahren und Empfängerentität zur sicheren Ausführung von Software
Procédé et entité réceptrice d'exécution sécurisée de logiciels

(43) Date of publication of application: 20.04.2016
(73) Proprietor: QuBalt GmbH, 24534 Neumünster (DE)
(72) Inventor: Harder, Wulf, 1005 Riga (LV); Unruh, Dominique, 50090 Tartu (EE); Resas, Uwe, 1005 Riga (LV)
(74) Representative: Horn Kleimann Waitzhofer Patentanwälte PartG mbB

(56) References cited:
- EP-A2- 1 734 717
- ABIDIN AYSAJAN ET AL: "Direct proof of security of Wegman-Carter authentication with partially known key", QUANTUM INFORMATION PROCESSING, KLUWER ACADEMIC, DORDRECHT, NL, vol. 13, no. 10, 20 September 2013 (2013-09-20), pages 2155-2170, XP035386335, ISSN: 1570-0755, DOI: 10.1007/S11128-013-0641-6 [retrieved on 2013-09-20]
- LI MEIHONG ET AL: "USB key-based approach for software protection", INDUSTRIAL MECHATRONICS AND AUTOMATION, 2009. ICIMA 2009. INTERNATIONAL CONFERENCE ON, IEEE, PISCATAWAY, NJ, USA, 15 May 2009 (2009-05-15), pages 151-153, XP031484175, ISBN: 978-1-4244-3817-4

## Description

### FIELD OF THE INVENTION

The present invention relates to a method for secure execution of software at a receiver entity, wherein the software is executed in the receiver entity conditionally. Moreover, the present invention relates to a receiver entity for secure execution of software and to a method for secure transmission and execution of software.

### BACKGROUND

The portion of software used in automobiles, aircraft and other means of transportation (hereafter: vehicles) is increasing steadily. Therefore, the risk of malfunction in vehicles due to software bugs is increasing, too. In today's vehicles, software installation can be performed only in service garages with special hardware equipment, and thus serious software bugs can be fixed only by means of expensive product recalls. As a result, there is an interest in connecting vehicles to the Internet and executing software installations online, at any place and time. However, while connecting vehicles to the Internet offers many benefits, it also creates risks for cyber-attacks on the vehicles.

For instance, a successful attack on online software installation methods can inject a special type of malware into the vehicle's software, called "trojan horse" or "trojan". A trojan can be designed to transmit privacy-sensitive information like vehicle location, vehicle speed and audio/video content to an adversary. They can also be programmed to take over control of the vehicle, and, in the worst case, they can cause accidents when they have access to safety-critical vehicle components, like steering controls, engine management and braking systems. It is therefore a realistic scenario to use trojans for attacks on particular vehicles, their passengers, and their payload.

In yet another attack scenario, sophisticated trojans could be injected in a large scale mission in all vehicles from a specific manufacturer. With access to time information, or the ability to receive external signals, for example via the Internet, a coordinated cyber-attack on all moving vehicles from the manufacturer can be executed. This would be a cyber-attack of a magnitude never before experienced.

Conventional software installation methods use digital certificates to ensure that only designated software is installed. Digital certificates are generated and verified using standardized cryptographic primitives, like hash functions and, for example, the asymmetric RSA encryption algorithm, as described in the following simplified description. The sender of the software inputs the software into a cryptographic hash function in order to calculate a first hash value. Then, the first hash value is encrypted using the asymmetric RSA encryption algorithm and the sender's secret key. Next, the software and the encrypted first hash value are transmitted to the receiver. The receiver then verifies the authenticity of the received software by applying the cryptographic hash function to the software received in order to calculate a second hash value. The receiver then decrypts the hash value received with the software transmission using the asymmetric RSA decryption algorithm and the sender's public key to obtain the first hash value. If the first and the second hash values match, the received software is accepted and can be installed.

There are several issues with using standardized cryptographic primitives. The main issue is that no mathematical proofs exist that the cryptographic primitives are actually secure. Furthermore, the cryptographic primitives do not provide information-theoretic security. "Information-theoretic security" means that a cryptographic primitive cannot be broken even if the adversary has unlimited computing power, because the adversary does not have enough information to break the cryptographic primitive.

Another issue is that potential advancements in research fields like cryptanalysis, SAT-solvers, and complexity theory could be applied to break cryptographic primitives without security proofs. Such advancements broke, for instance, the hash functions MD2, MD4, MD5, SHA-0, SHA-1, and the stream cipher RC4. The history of cryptography shows that standardized cryptographic primitives generally have a limited lifetime.

Furthermore, some standards for cryptographic primitives might be influenced in such a way that they may be broken with secret unpublished cryptanalysis methods in order to get access to secret information transmitted encrypted over the Internet, stored encrypted on servers; to inject trojans into specific computer systems to get access to secret information; or to influence or control the computer system. Injecting trojans in computer systems is a very important strategic capability that can also be used for cyber warfare.

These secret unpublished cryptanalysis methods could leak to the public, or to hostile countries. Independent of any leaked methods, hacker groups or researchers in hostile countries could develop expertise in exploiting the weaknesses of the standardized cryptographic primitives. If this expertise were to be used to break the asymmetric encryption methods deployed in software installation methods, the secret keys of vehicle manufacturers could get into the hands of adversaries. Also, knowledge about how to implement pre-image attacks on cryptographic hash functions could be used to inject trojans in vehicles.

Various research teams at universities and in corporations worldwide are working on the development of quantum computers. As soon as powerful quantum computers are available, today's deployed asymmetric encryption methods will be broken with them. Quantum computer prototypes with a few qubits have already been developed, for instance a device with 14 qubits has been produced at the University of Innsbruck, Austria (see reference [5]). However, to break today's asymmetric encryption methods, at least one thousand or even several thousand qubits will be required. In 2012, IBM presented a rough time estimate, stating that the first practically usable quantum computer would be available in 10-15 years (see reference [6]).

It is possible that the existence of the first practically usable quantum computer will be kept secret. It is conceivable that the public would neither know about the existence of the first quantum computers, nor when today's asymmetric encryption methods have been broken with them.

Post-quantum cryptography is the practice and study of cryptographic methods that are supposed to be secure against quantum computer attacks. However, it is not known which cryptographic methods can be really called post-quantum, because there are still many open mathematical questions. For instance, lattice-based cryptography is promoted by the cryptographic community as post-quantum, but there are already statements from leading quantum computer scientists questioning this view. Therefore, post-quantum cryptographic methods are today rather a wide field of research and away from being provably secure against quantum computer attacks.

Missing mathematical security proofs; weakened cryptography standards; advancements in research fields like cryptanalysis, SAT-solvers and complexity theory; and the development of quantum computers, are long term threats for vehicle online software installation methods and the secure execution of software.

A prior art solution is disclosed in the paper of ABIDIN AYSAJAN ET AL., with the title "Direct proof of security of Wegman-Carter authentication with partially known key", QUANTUM INFORMATION PROCESSING, KLUWER ACADEMIC, DORDRECHT, NL, vol. 13, no. 10, 20 September 2013, pages 2155-2170, ISSN 1570-0755.

Accordingly, it is an aspect of the present invention to provide an improved secure execution of software at a receiver entity.

### BRIEF SUMMARY OF THE INVENTION

The above and other objects are achieved by means of the appended set of claims.

According to a first aspect, a method for secure execution of software at a receiver entity is proposed, wherein the software is executed in the receiver entity conditionally. The method comprises the following steps at the receiver entity: executing an authentication scheme with a sender entity using an authentication key (that is not marked as unusable) to select a hash function from a hash function family, receiving the software and a first hash value from the sender entity, wherein the first hash value is calculated by inputting the software into the selected hash function, storing the authentication key and usage data about the usage of the stored authentication key, updating the usage data with every usage of the stored authentication key, marking the stored authentication key as unusable or deleting the stored authentication key when a defined usage limit according to the updated usage data is reached, inputting the received software into the selected hash function to calculate a second hash value, and executing the software only if the first hash value is equal to the second hash value. The present method enhances the security for executing a software transmitted by a sender entity and received at a receiver entity by comparing a first hash value calculated by the sender entity and a second hash value calculated by the receiver entity. The sender entity calculates the first hash value by inputting the software into a hash function which is selected from a hash function family using the authentication key of the authentication scheme executed between the sender entity and the receiver entity. In an analogous way, the receiver entity calculates the second hash value by inputting the received software into the same hash function which is selected from the same hash function family, dependent on said common authentication key.

In particular, selecting a hash function from a family of hash functions using the authentication key and calculating a first hash value of the software may be equivalent to inputting an authentication key and the software in any order into a hash function. Bits of the authentication key even may be mixed with bits of the software.

Because the stored authentication key is invalidated, e.g. by marking it as unusable or by deleting it, the amount of information that is usable for cryptanalysis or SAT-solvers is limited.

In particular, the software may be transmitted from the sender entity to the receiver entity by online methods or by offline methods. Said online methods may include transmitting the software over a network, e.g. the Internet or a wireless network. Said offline methods may include providing the software to the receiver entity by a data carrier, like a CD, a DVD, or a USB-stick.

The software transmitted from the sender entity to the receiver entity may be encrypted or may be unencrypted. Alternatively or additionally, said software may be transformed or not transformed.

In a further embodiment, the authentication scheme is information-theoretically secure. In particular, the authentication scheme is information-theoretically secure if its security derives only from information theory. It cannot be broken even when an adversary has unlimited computing power, because the adversary does not have enough information to break the secure authentication scheme. Thus, the authentication scheme is also secure against quantum adversaries.

In a further embodiment, the authentication scheme is the authentication scheme of Wegman and Carter (see references [1] and [2]), which is, advantageously information-theoretically secure. The security of the authentication scheme of Wegman and Carter for settings in which the authentication key is partially known by the adversary is studied in reference [3].

In a further embodiment, the receiver entity is a vehicle. For example, the vehicle is a car, a truck, an aircraft, a spacecraft, or a watercraft.

Advantageously, the present method prevents attacks on vehicles, a particular vehicle, or a group of vehicles. Such attacks prevented by the present method may include sending private data from the receiver entity to an adversary, e.g. by a trojan incorporated in the received software. Such private data of the receiver entity may include location data, audio content, video content, and personal data stored in the vehicle's computer system.

Furthermore, such attacks may include manipulating the vehicle's safety-critical systems, like motor management, brake system, steering control, and driving assistance. Moreover, such attacks may include manipulating the vehicle to create and transmit data, like location data and vehicle speed, and/or manipulating the vehicle's performance in order to damage the reputation of the vehicle's manufacturer, e.g. by increasing fuel consumption, causing occasional engine failures, or triggering electrical problems. Furthermore, such attacks may include taking control over the vehicle to execute a targeted attack on passengers and payloads, disabling the vehicle or remote-controlling the vehicle.

In a further embodiment, the receiver entity is a device. For example, the device is a mobile device or a safety-critical device, in particular a medical device. Advantageously, the present method prevents attacks on devices, a particular device or a group of devices. Such attacks prevented by the present method may include sending private data from the receiver entity to an adversary, e.g. by a trojan incorporated in the received software. Such private data from the receiver entity may include location data, audio content, video content and personal data stored in the device's computer system.

Moreover, such attacks may include manipulating the device to create and transmit false data. Furthermore, such attacks may include taking over control of the device to execute a targeted attack on the system the device is part of, or to disable the device.

In a further embodiment, for each of a plurality of receiver entities, the sender entity transmits the software and a distinct individual first hash value to each receiver entity. Advantageously, in the process of transmitting one particular piece of software to a plurality of receiver entities, an adversary cannot use one intercepted first hash value sent to one of the receiver entities in order to attack the other receiver entities.

In particular, the sender entity comprises at least two units. A first unit may calculate the first hash value of the software and a second unit may transfer the software and the calculated first hash value to the receiver entity. Alternatively, a first unit calculates the first hash value of the software and transfers the calculated first hash value to the receiver entity, and a second unit transfers the software to the receiver entity.

In a further embodiment, a set of N authentication keys is stored at the receiver entity in a production process of the receiver entity, with N ≥ 1. Advantageously, the distribution of the authentication keys is done in a secure way. For example, quantum key distribution may be used to transmit the authentication keys.

In particular, the production process includes all the steps employed by a manufacturer to produce and configure a receiver entity, through its delivery to the user. Advantageously, the authentication keys can be stored securely in the receiver entity during the production process, while it remains fully under the control of the manufacturer.

In a further embodiment, the set of N authentication keys is stored in a secure hardware, with N ≥ 1, wherein the secure hardware is installed at the receiver entity. The secure hardware may be a secure chip or a hardware security module. In particular, the secure hardware is a tamper-resistant storage device which is configured to protect against manipulation of the authentication key. This prevents adversaries from using manipulated authentication keys to execute malicious software advantageously. Furthermore, the authentication keys are kept secret. Alternatively, or additionally, the authentication keys may be distributed in a secure way. For example, the authentication keys may be stored in a secure, tamper-resistant chip, in a smart-card, in a tamper-resistant SIM card, or in a hardware security module. In particular, SIM cards and SIM card readers may be used to install authentication keys in the receiver entity in a secure way anytime.

In a further embodiment, the authentication key is protected using white-box cryptography.

White-box cryptography is an approach to designing and implementing cryptographic algorithms in such a way that their program code, internal data, and keys are protected against attacks like debugging, reverse-engineering and key retrieval (see reference [4]). In particular, the authentication key is stored in tamper-resistant storage which is configured to protect against manipulation of the authentication key, to prevent an adversary from using manipulated authentication keys to execute malicious software advantageously. Furthermore, the authentication keys are kept secret.

In a further embodiment, the authentication key stored in the receiver entity is modified by means of modification data that are shared between the sender entity and the receiver entity. In particular, an adversary can attack the receiver entity only if he has access to the authentication keys and can monitor the entire communication between the sender entity and the receiver entity to intercept said modification data. Thus, the security is enhanced by using said modification data.

In a further embodiment, the modification data contains a modification key, wherein the stored authentication key is XORed with the modification key, forming a new authentication key. Advantageously, by means of said modification key, a fast operation to modify the stored authentication keys is provided.

In a further embodiment, the modification data is smaller than the authentication key, or smaller than N authentication keys. In particular, the modification data is input into an algorithm to generate expanded modification data. The algorithm may be a pseudorandom number generator that takes the modification data as seed to initialize the pseudorandom number generator. The output of the pseudorandom number generator are the expanded modification data.

Any data that has been transmitted between the sender entity and the receiver entity may be used as modification data.

In a further embodiment, the usage data is embodied as a flag, as a counter, or as a whitelist.

Any embodiment of the first aspect may be combined with any embodiment of the first aspect to obtain another embodiment of the first aspect.

According to a second aspect, the invention relates to a computer program comprising a program code for executing the method of the first aspect or of an embodiment of the first aspect for secure execution of software at a receiver entity when run on at least one computer.

According to a third aspect, a receiver entity for secure execution of software is proposed, wherein the software is executed in the receiver entity conditionally. The receiver entity includes an authentication unit, a receiving unit, a storing unit and a processing unit. The authentication unit is configured to execute an authentication scheme with a sender entity using an authentication key to select a hash function from a hash function family. The receiving unit is configured to receive the software and a first hash value from the sender entity, wherein the first hash value is calculated by inputting the software into the selected hash function. The storing unit is configured to store the authentication key and usage data about the usage of the stored authentication key. The processing unit is configured to update the usage data with every usage of the stored authentication key, to mark the stored authentication key as unusable or to delete the stored authentication key when a defined usage limit according to the updated usage data is reached, to input the received software into the selected hash function to calculate a second hash value, and to execute the software only if the first hash value is equal to the second hash value.

Any embodiment of the first aspect may be combined with the above third first aspect to obtain a further embodiment of the third aspect.

According to a fourth aspect, a system (arrangement) for secure transmission and execution of software is proposed. The system includes a sender entity and a receiver entity. The software is transferred from the sender entity to the receiver entity, wherein the software is executed in the receiver entity conditionally. The sender entity and the receiver entity are configured to execute an authentication scheme using an authentication key to select a hash function from a hash function family, respectively. The sender entity transmits the software together with a first hash value to the receiver entity. The sender entity calculates the first hash value by inputting the software into the selected hash function. The receiver entity stores the authentication key and usage data about the usage of the stored authentication key. Furthermore, the receiver entity updates the usage data with every usage of the stored authentication key. Moreover, the receiver entity is configured to mark the stored authentication key as unusable or to delete the stored authentication key when a defined usage limit according to the updated usage data is reached. The receiver entity is configured to input the received software into the selected hash function to calculate a second hash value. The software is executed at the receiver entity only if and only if the first hash value is equal to the second hash value.

Any embodiment of the first aspect may be combined with the above fourth aspect to obtain a further embodiment of the fourth aspect.

The following example "Software Installation" may illustrate the functionality of the above mentioned aspects.

### Example: Software Installation

This example "Software Installation" includes "Initialization of a Software Installation Module" and "Online Installation of Software".

### Initialization of a Software Installation Module:

In this example, a vehicle is equipped with the above mentioned receiver entity, which is embodied as a software installation module that ensures that only valid software is installed and executed in the vehicle. The software installation module comprises a receiver unit that provides a network interface for cable and wireless connections, an authentication unit for execution of the authentication scheme using the hash function, a storing unit to store authentication keys in a tamper-resistant memory, and an execution unit to operate on usage data.

At the vehicle manufacturer, during the vehicle production process, the vehicle's software installation module is initialized using a designated initialization system. The initialization system comprises a hardware security module and a cable network interface.

The initialization process may consist of several steps. First, the manufacturer's initialization system is connected via a cable network to the vehicle's software installation module. After a secure communication channel has been established, the actual initialization starts. In the initialization system's hardware security module a set of authentication keys and their corresponding identifiers are generated and stored in a database. The set of authentication keys is unique and assigned to this particular vehicle only. In a next step, the authentication keys and identifiers are transmitted via the cable network from the initialization system to the vehicle's software installation module. The receiver unit receives the authentication keys and identifiers, and the storage unit stores them in the tamper-resistant memory. Then, for each authentication key, the processing unit generates usage data for that key and marks the stored authentication keys as unused in the usage data.

At this point, an identical set of authentication keys and identifiers are stored in the manufacturer's initialization system and in the vehicle's software installation module. After a vehicle's software installation module has been initialized, it is ready to receive and install software.

### Online Installation of Software:

After the vehicles have been shipped to their users, the vehicle manufacturer has the capability to perform online software maintenance during the entire lifetime of the vehicle. The vehicle just needs to be online, and the vehicle manufacturer can remotely install software.

The vehicle manufacturer deploys an online software distribution system to do the online software installation. This system comprises a hardware security module that contains an authentication unit for the execution of the authentication scheme using the hash function, a storage unit that contains and utilizes a database with the total set of authentication keys and usage data of all vehicles equipped with the software installation module, and a processing unit that operates on the usage data.

The online software distribution system further comprises a sender unit capable of transmitting an installation package via a wireless Internet connection to the vehicle's software installation module. Furthermore, the online software distribution system stores the software that should be installed in the vehicles.

The online software installation process for one specific vehicle consists of several steps. At first, the online software distribution system connects via a wireless Internet connection to the vehicle's software installation module and requests to install software. If the software installation module accepts the request, the installation can start and the online software distribution system prepares an installation package specially for the vehicle.

Building of the installation package may be done as follows. The software to be installed is passed to the hardware security module. The hardware security module requests from the storage unit for this specific vehicle an unused authentication key and its corresponding identifier. In a subsequent step, the software and the authentication key are passed to the authentication unit, where the software and the authentication key are input into the authentication scheme. The authentication scheme selects a hash function from a family of hash functions using the authentication key and calculates a first hash value of the software. The processing unit requests from the storage unit the usage data of the authentication key and marks the authentication key as unusable in the usage data. The first hash value and the identifier are passed to the online software distribution system. Finally, the software, the identifier and the first hash value are stored in the installation package, which is transmitted via the sender unit wirelessly to the vehicle's software installation module.

The receiver unit of the vehicle's software installation module receives the installation package and unpacks the software, the identifier, and the first hash value from it. Then, the software and the identifier are passed to the authentication unit. The authentication unit requests from the storage unit the authentication key that corresponds to the identifier, as well as the authentication key's usage data. If the usage data indicate that the authentication key is unused, the authentication unit proceeds and inputs the software and the authentication key into the authentication scheme to calculate a second hash value of the software. In a next step, the processing unit requests from the storage unit the usage data of the authentication key and marks it as unusable in the usage data.

If the first hash value received in the installation package matches the second hash value calculated in the receiver entity's authentication module, the software is valid and the installation process proceeds to completion. However, if the hash values do not match, the software is invalid and rejected.

If the hash values do not match, a plurality of different reactions are possible, e.g. including providing a message to the user of the vehicle, delaying a possible update of the software at the vehicle for a certain time, and/or providing an alert to the vehicle manufacturer.

In particular, the number of unsuccessful attempts of updating the software, i.e. if the hash values do not match, may be limited to a certain threshold. The effect of limiting these unsuccessful attempts is to prevent a brute force attack, for example.

In the following, exemplary embodiments of the present invention are described with reference to the enclosed figures.

### BRIEF DESCRIPTION OF THE DRAWINGS

Fig. 1 shows a first embodiment of a sequence of method steps for secure execution of software at a receiver entity;
Fig. 2 shows a second embodiment of a sequence of method steps for secure execution of software at a receiver entity;
Fig. 3 shows an embodiment of a receiver entity for secure execution of software;
Fig. 4 shows an embodiment of a sequence of method steps for secure transmission and execution of software;
Fig. 5 shows a Petri net of an embodiment of the sender entity;
Fig. 6 shows a Petri net of an embodiment of the receiver entity;
Fig. 7 shows a Petri net illustrating an embodiment of modifying the authentication keys stored in the receiver entity by modification data; and
Fig. 8 shows a Petri net illustrating a further embodiment of modifying the authentication keys stored in the receiver entity by modification data.

Similar or functionally similar elements in the figures have been allocated the same reference signs if not otherwise indicated.

### DETAILED DESCRIPTION OF THE EMBODIMENTS

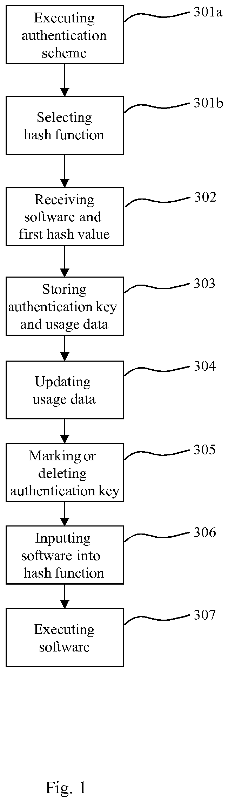

In Fig. 1, an embodiment of a sequence of method steps for secure execution of software 1 at a receiver entity 3 is depicted. For example, the receiver entity 3 is a car, the software 1 is the operating system of a controller of the car, and the sender entity 2 is a server operated by a car manufacturer.

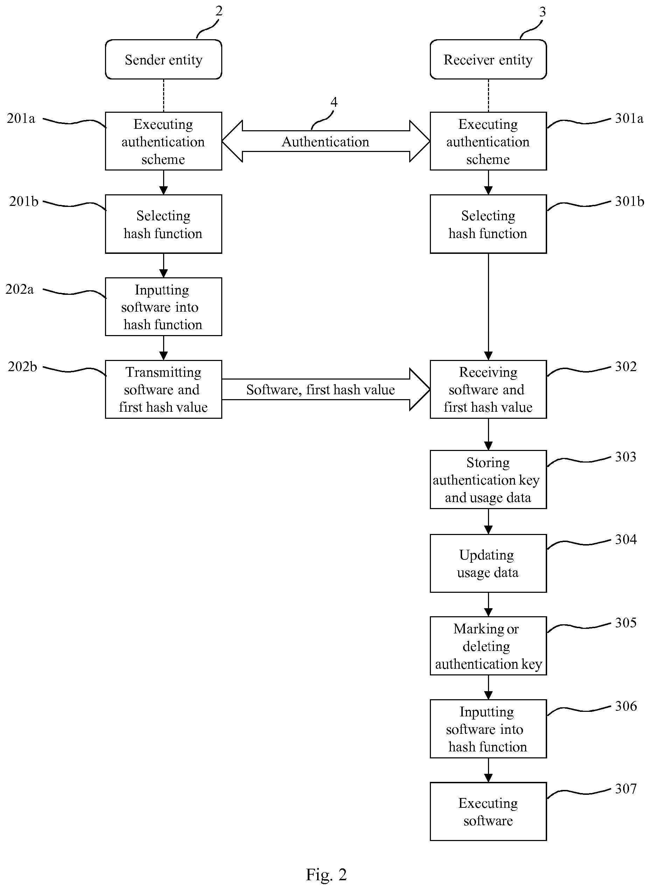

In this context, Fig. 2 shows a system with a sender entity 2 and the receiver entity 3, wherein the software 1 is transferred from the sender entity 2 to the receiver entity 3 and the transferred software 1 is executed in the receiver entity 3 conditionally.

The method of Fig. 1 includes the following steps 301-307 which are executed at the receiver entity 3:
In step 301 embodied by sub-steps 301a and 301b, an authentication scheme 4 is executed (sub-step 301a) with the sender entity 2 using an authentication key 5 to select a hash function 6 from a hash function family 13 (sub-step 301b). In particular, both the sender entity 2 and the receiver entity 3 use the common authentication key 5 to select the same hash function 6 from the hash function family 13. The hash function family 13 may be stored at the receiver entity 3 or may be provided to the receiver entity 3 alternatively. For example, the authentication scheme 4 may be information-theoretically secure. As an example, an authentication scheme of Wegman & Carter may be utilized here (see references [1] and [2]).

In step 302, the software 1 and a first hash value 7 transferred from the sender entity 2 are received at the receiver entity 3. The first hash value 7 is calculated by the sender entity 2 by inputting the software 1 into the selected hash function 6. For example, the sender entity 2 may communicate with a plurality of receiver entities 3. In such a case, the sender entity 2 may transmit the software 1 and a respective individual first hash value 7 to a respective receiver entity 3. In other words, a respective receiver entity 3 receives the software 1 and a first hash value 7 which is calculated for the respective receiver entity 3 individually.

In step 303, the authentication key 5 and usage data 8 are stored at the receiver entity 3. The usage data 8 includes information about the usage of the stored authentication key 5. For example, the usage data 8 is embodied as a flag indicating the usage of the authentication key 5. For example, the flag may be 0, if the authentication key 5 was not used yet, and may be 1, if the authentication key 5 was used. As an alternative, the usage data 8 may be embodied as a counter or as a whitelist. If the usage data 8 is a counter, a predefined number of usages (for example three) of the authentication key 5 are allowed.

If the usage data 8 is embodied as a whitelist, said whitelist may indicate which authentication keys 5 are allowed. In other words, a received authentication key 5 which is not on the whitelist indicates that the received authentication key 5 is unusable or has to be deleted.

Further, the receiver entity 3 may store a set of N authentication keys 5, with N ≥ 1. In particular, the N authentication keys 5 are stored in the receiver entity 3 in a production process of the receiver entity 3. For example, the N authentication keys 5 may be stored in a secure hardware in the receiver entity 3. Further, the authentication key 5 may be protected, in particular using white-box cryptography. In a further embodiment, the authentication key 5 stored in the receiver entity 3 may be modified by means of modification data 10. Said modification data 10 may be received at the receiver entity 3, e.g. over a wireless network. The received modification data 10 may contain a modification key. The stored authentication key 5 may be XORed with the received modification key for forming a new authentication key 5. By using new or updated authentication keys 5, the security may be enhanced.

In step 304, the usage data 8 is updated at the receiver entity 3 with every usage of the stored authentication key 5. If, for the example, the usage data 8 is a counter, the counter is incremented with every usage of the authentication key 5.

In step 305, the stored authentication key 5 is marked as unusable, when a defined usage limit according to the updated usage data 8 is reached. As an alternative in step 305, the stored authentication key 5 is deleted when the defined usage limit according to the updated usage data 8 is reached.

In particular, updating 304 the usage data 8 with every usage of the stored authentication key 5 may include marking 305 the stored authentication key 5 as unusable. If, for example, the usage data 8 are a flag, then the flag value 0 means that the authentication key 5 is not used, and the authentication key 5 may be used. The flag value 1 means that the authentication key 5 is used and the authentication key 5 may not be used anymore, so it is unusable. Furthermore, a marking data may be part of the usage data 8. Deciding whether an authentication key 5 is marked as unusable may be done by inputting the usage data into a function. The result of the function calculation will determine whether the authentication key 5 is marked as unusable. The function may be calculated before using an authentication key 5 to select a hash function 6 from a hash function family 13. If the authentication key 5 is unusable, the software 1 may be rejected.

In step 306, the received software 1 is input into the selected hash function 6 at the receiver entity 3 for calculating a second hash value 9.

In step 307, the first hash value 7 and the second hash value 9 are compared. The software 1 is executed at the receiver entity 3 only if the first hash value 7 and the second hash value 9 are equal.

In particular, the steps of the method of Fig.1 are not executed consecutively. For example, step 303 may be the first step.

Fig. 2 shows a second embodiment of a sequence of method steps for secure execution of software at the receiver entity 3. In Fig. 2, method steps 201a, 201b, 202a, 202b are executed by the sender entity 2, wherein steps 301a, 301b, and 302-307 are executed by the receiver entity 3.

The sender entity 2 (step 201a) and the receiver entity 3 (step 301a) execute an authentication scheme 4 using an authentication key 5.

Furthermore, the sender entity 2 (step 201b) and the receiver entity 3 (step 301b) select a hash function 6 from a hash function family 13 using said authentication key 5, respectively.

In step 202a, the sender entity 2 inputs the software 1 into the selected hash function for calculating a first hash value 7.

In step 202b, the sender entity 2 transmits the software 1 together with the calculated first hash value 7 to the receiver entity 3.

In step 302, the receiver entity 3 receives the software 1 and the first hash value 7 transmitted by the sender entity 2.

In step 303, the receiver entity 3 stores the authentication key 5 and usage data 8 about the usage of the stored authentication key 5.

In step 304, the receiver entity 3 updates the usage data 8. This update is done with every usage of the stored authentication key 5.

In step 305, the receiver entity 3 marks the stored authentication key 5 as unusable or it deletes the stored authentication key 5 when a defined usage limit according to the updated usage data 8 is reached.

In step 306, the receiver entity 3 inputs the received software 1 into the selected hash function 6 to calculate a second hash value 9.

In step 307, the receiver entity 3 compares the first hash value 7 with the second hash value 9. Only if the first hash value 7 and the second hash value 9 are equal to each other, the receiver entity 3 executes the received software 1. If the first hash value 7 and the second hash value 9 are not equal to each other, the receiver entity 3 does not execute the software 1, but rejects it.

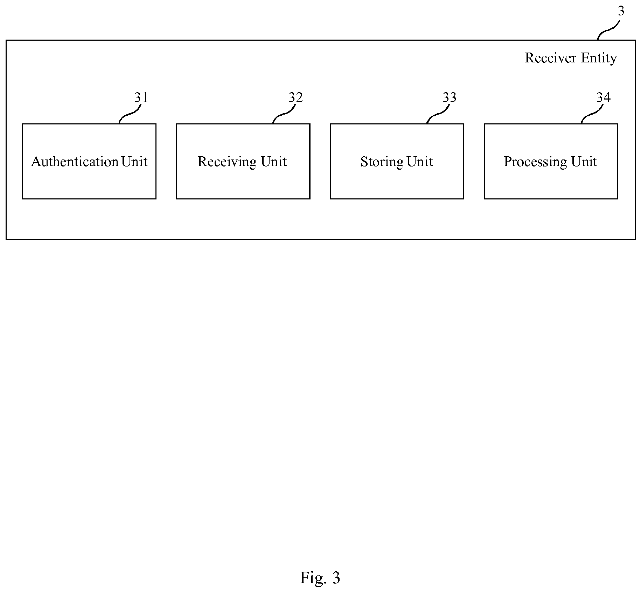

Fig. 3 shows an embodiment of a receiver entity 3 for a secure execution of software 1. The software 1 is received from a sender entity 2 (see Fig.2) and is executed in the receiver entity 3 conditionally. The receiver entity 3 comprises an authentication unit 31, a receiving unit 32, a storing unit 33 and a processing unit 34.

The authentication unit 31 is configured to execute an authentication scheme 4 with the sender entity 2 using an authentication key 5 to select a hash function 6 from a hash function family 13.

The receiving unit 32 is configured to receive the software 1 and the first hash value 7 from the sender entity 2. At the sender entity 2, the first hash value 7 is calculated by inputting the software 1 into the selected hash function 6.

The storage unit 33 is configured to store the authentication key 5 and usage data 8 about the usage of the stored authentication key 5.

Moreover, the processing unit 34 is configured to update the usage data 8 with every usage of the stored authentication key 5. Further, the processing unit 34 marks the stored authentication key 5 as unusable when a defined usage limit according to the updated usage data 8 is reached. Alternatively, or additionally, the processing unit 34 may delete the stored authentication key 5 when the defined usage limit according to the updated usage data 8 is reached. Furthermore, the processing unit 34 inputs the received software 1 into the selected hash function 6 to calculate a second hash value 9. Only if the first hash value 7 is equal to the second hash value 9, the software 1 is executed in the receiver entity 3.

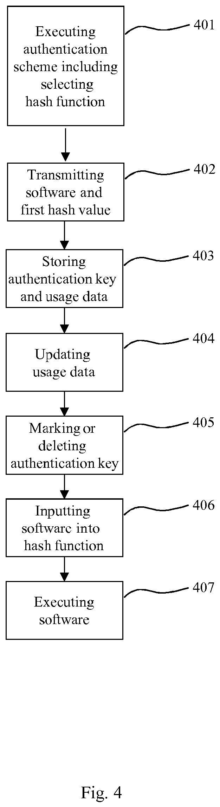

Fig. 4 shows an embodiment of a sequence of method steps for secure transmission and execution of software 1, wherein the software 1 is executed in a receiver entity 3 conditionally.

The method of Fig. 4 includes the following methods steps 401-407:

In step 401, an authentication scheme 4 between the sender entity 2 and the receiver entity 3 is executed using an authentication key 5 to select a hash function 6 from a hash function family 13. In particular, both the sender entity 2 and the receiver entity 3 use the common authentication key 5 to select the same hash function 6 from the hash function family 13.

In step 402, the software 1 and a first hash value 7 are transmitted from the sender entity 2 to the receiver entity 3, wherein the sender entity 2 calculates the first hash value 7 by inputting the software 1 into the selected hash function 6.

In step 403, the authentication key 5 and usage data 8 about the usage of the stored authentication key 5 are stored at the receiver entity 3.

In step 404, the usage data 8 is updated at the receiver entity 3 with every usage of the stored authentication key 5.

In step 405, the authentication key 5 is marked as unusable or is deleted by the receiver entity 3, when a defined usage limit according to the updated usage data 8 is reached.

In step 406, the received software 1 is input into the selected hash function 6 by the receiver entity 3 to calculate a second hash value 9.

In step 407, the software 1 is executed by the receiver entity 3 only if the first hash value 7 and the second hash value 9 are equal.

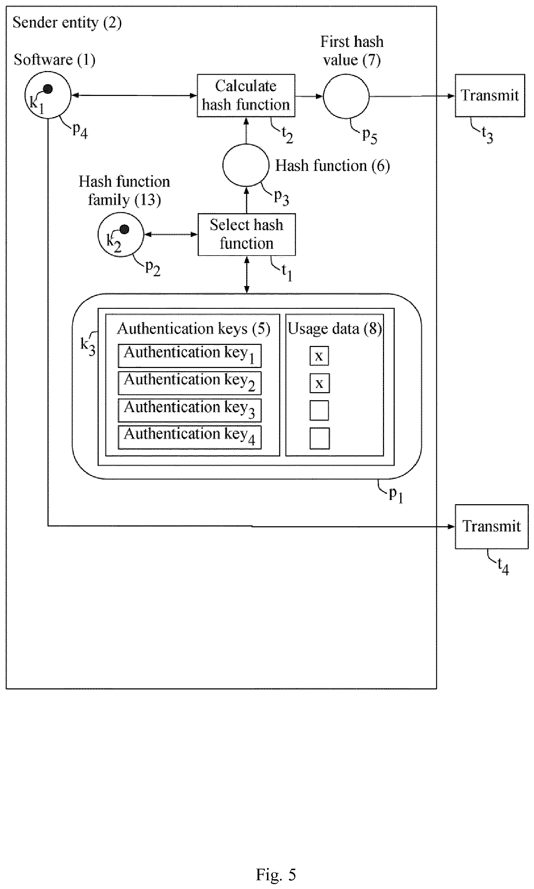

Moreover, Figs. 5 to 8 show different Petri nets. Each of the Petri nets of Figs. 5 to 8 use tokens k, places p and transitions t.

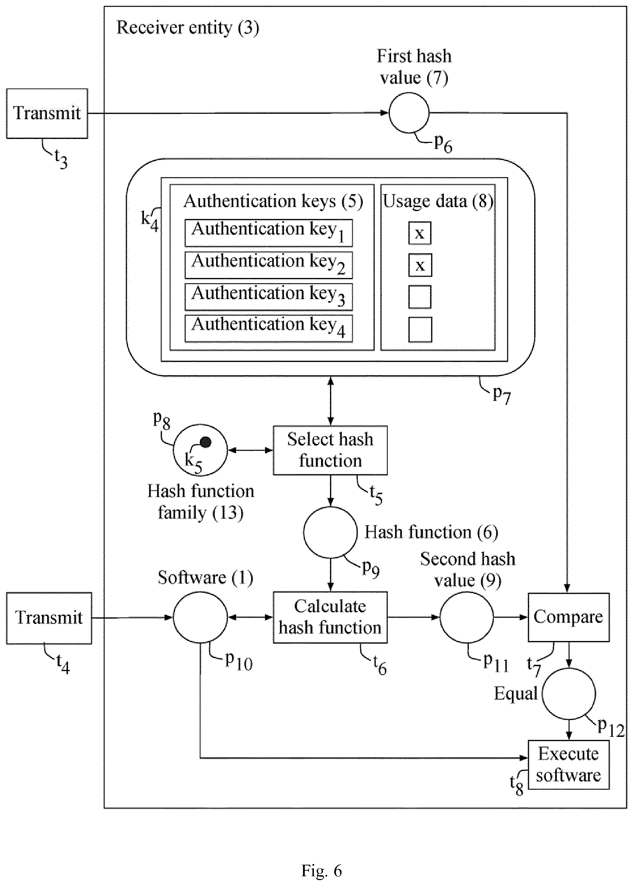

Fig. 5 shows a Petri net of an embodiment of the sender entity 2. Fig. 6 shows a Petri net of an embodiment of the receiver entity 3. Bringing Figs. 5 and 6 together, the sender entity 2 of Fig. 5 and the receiver entity 3 of Fig. 6 are linked by two transmit transitions t₃ and t₄. By means of the transmit transition t₃, the calculated first hash value 7 is transferred from the sender entity 2 of Fig. 5 to the receiver entity 3 of Fig. 6. By means of the transmit transition t₄, the software 1 is transferred from the sender entity 2 of Fig. 5 to the receiver entity 3 of Fig. 6.

In the following, the details of Figs. 5 and 6 are discussed:
Place p₁ of Fig. 5 contains a token k₃ which includes four authentication keys 5 (authentication key₁, authentication key₂, authentication key₃ and authentication key₄). Further, the token k₃ includes usage data 8 which indicates the usage of the respective authentication key 5. In the example of Fig. 5, the respective x in the usage data 8 indicates that the corresponding authentication keys 5 were used. In detail, according to Fig. 5, authentication key₁ and authentication key₂ were used, while authentication key₃ and authentication key₄ were not used.

Place p₂ contains a token k₂ for a hash function family 13. In transition t₁, a certain hash function 6 is selected from the hash function family 13 using a certain one of the authentication keys 5. Place p₃ then contains the selected hash function 6.

Place p₄ contains a token k₁ for the software 1. In transition t₂, the software 1 is input into the hash function 6 to calculate the first hash value 7 (see place p₅).

As already indicated above, in transition t₃, the calculated first hash value 7 is transferred to the receiver entity 3 of Fig. 6, and in transition t₄, the software 1 is transferred to the receiver entity 3.

With reference to Fig. 6, place p₆ has the first hash value 7 as received from the sender entity 2. Further, place p₁₀ has the software 1 received from the sender entity 2.

Place p₇ has a token k₄ which corresponds to the token k₃ of Fig. 5. Further, transition t₅ corresponds to transition t₁ of Fig. 5, place p₈ corresponds to place p₂ of Fig. 5, and token k₅ corresponds to token k₂ of Fig. 5.

Place p₉ contains the hash function 6 as provided by the transition t₅ for selecting the hash function 6 the input of tokens k₄ and k₅.

In transition t₆, the hash function 6 is calculated with the input of the software 1 (see p₁₀) and the hash function 6 (see p₉). Then, place p₁₁ includes the calculated second hash value 9 as output of the transition 6. In transition t₇, the contents of p₆ and p₁₁ are compared, namely the first hash value 7 and the second hash value 9. If the first hash value 7 is equal to the second hash value 9, then the transition t₇ will put a token in place p₁₂. The software 1 of place p₁₀ can be executed with transition t₈ only if a token is in place p₁₂.

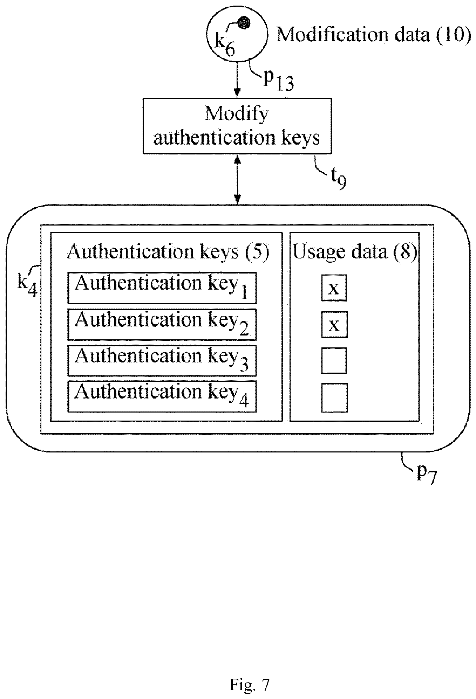

Furthermore, Fig. 7 shows a Petri net illustrating that the authentication keys 5 stored in the receiver entity 3 (see place p₇ having the token k₄) may be modified by modification data 10. The same applies for the place p₁ having the token k₃ for the sender entity 2 of Fig. 5.

In Fig. 7, place p₁₃ has a token k₆ with said modification data 10. In transition t₉, the authentication keys 5 of the token k₄ may be modified using the modification data 10 of token k₆. For example, said modification data 10 may contain a modification key. In transition t₉, the authentication key 5 may be XORed with the modification key to form a new authentication key 5. The new authentication key 5 may be incorporated in token k₄.

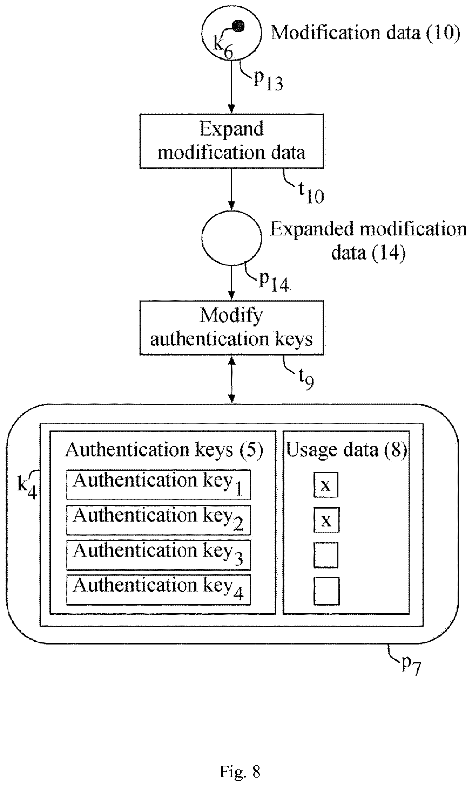

Fig. 8 shows a Petri net illustrating a further embodiment for modifying authentication keys 5.

Compared to the Petri net of Fig. 7, the Petri net of Fig. 8 is extended by a transition t₁₀ and a place p₁₄. In transition t₁₀, the modification data 10 of token k₆ are expanded. For example, if the modification data 10 is a seed for a pseudorandom function, the expansion of the modification data 10 is done by inputting said seed to the pseudorandom function and using the result of the pseudorandom function as expanded modification data 14. Place p₁₄ contains the expanded modification data 14. Said expanded modification data 14 is then used in transition t₁₀ for modifying the authentication keys 5.

While the present invention has been described with reference to certain embodiments, it will be understood by those skilled in the art that various changes may be made and equivalents may be substituted without departing from the scope of the present invention. In addition, many modifications may be made to adapt a particular situation to the teachings of the present invention without departing from its scope. Therefore, it is intended that the present invention is not limited to the particular embodiments disclosed, but that the present invention will include all embodiments falling within the scope of the appended claims.

### REFERENCE NUMERALS

- 1: software
- 2: sender entity
- 3: receiver entity
- 4: authentication scheme
- 5: authentication key
- 6: hash function
- 7: first hash value
- 8: usage data
- 9: second hash value
- 10: modification data
- 13: hash function family
- 14: expanded modification data
- 31: authentication unit
- 32: receiving unit
- 33: storing unit
- 34: processing unit
- 201 - 202: method step
- 301 - 307: method step
- 401 - 407: method step
- k; k1 - k6: token
- p; p1 - p14: place
- t; t1 - t10: transition

### REFERENCES

[1] J. Lawrence Carter and Mark N. Wegman, Universal Classes of Hash Functions, Journal of Computer and System Sciences 18, Nr. 2, p. 143-154, April 1979
[2] Mark N. Wegman and J. Lawrence Carter, New Hash Functions and Their Use in Authentication and Set Equality, Journal of Computer and System Sciences 22, p. 265-279, 1981
[3] Aysajan Abidin and Jan-Åke Larsson, Direct Proof of Security of Wegman-Carter Authentication with Partially Known Key, Quantum Information Processing 13, p. 2155-2170, 2013
[4] Brecht Wyseur, White-Box Cryptography, PhD Thesis, Katholieke Universiteit Leuven, March 2009
[5] Thomas Monz et al., 14-Qubit Entanglement: Creation and Coherence, Physical Review Letters, 2011
[6] IBM, IBM's stunning breakthrough: Quantum computing finally 'within reach', www.foxnews.eom/tech/2012/02/28/ibm-quantum-computing-as-little-as-10-years-off/, 2012

## Claims

1. A method for secure execution of software (1) at a receiver entity (3), wherein the software (1) is executed in the receiver entity (3) conditionally, the method comprising the following steps at the receiver entity (3):
executing (301) an authentication scheme (4) with a sender entity (2) using an authentication key (5) to select a hash function (6) from a hash function family (13),
receiving (302) the software (1) and a first hash value (7) from the sender entity (2), wherein the first hash value (7) is calculated by inputting the software (1) into the selected hash function (6),
storing (303) the authentication key (5) and usage data (8) about the usage of the stored authentication key (5), wherein the usage data (8) is embodied as a counter or as a whitelist,
updating (304) the usage data (8) with every usage of the stored authentication key (5),
marking (305) the stored authentication key (5) as unusable or deleting the stored authentication key (5) when a to a certain threshold defined usage limit according to the updated usage data (8) is reached,
inputting (306) the received software (1) into the selected hash function (6) to calculate a second hash value (9), and
executing (307) the software (1) only if the first hash value (7) is equal to the second hash value (9),
wherein the received first hash value (7) is a respective individual first hash value (7) calculated individually for each of a plurality of receiver entities (3).

2. The method of claim 1,
wherein the authentication scheme (4) is information-theoretically secure.

3. The method of claim 2,
wherein the authentication scheme (4) is the authentication scheme of Wegman and Carter.

4. The method of one of claims 1 to 3,
wherein the receiver entity (3) is a vehicle, in particular a car, a truck, an aircraft, a spacecraft or a watercraft.

5. The method of one of claims 1 to 3,
wherein the receiver entity (3) is a device, in particular a mobile device or a safety-critical device, in particular a medical device.

6. The method of one of claims 1 to 5,
wherein a set of N authentication keys (5) is stored at the receiver entity (3) in a production process of the receiver entity (3), with N ≥ 1.

7. The method of claim 6,
wherein the set of N authentication keys (5) is stored in a secure hardware, wherein the secure hardware is installed at the receiver entity (3).

8. The method of one of claims 1 to 7,
wherein the authentication key (5) is protected using white-box cryptography.

9. The method of one of claims 1 to 8,
wherein the authentication key (5) stored in the receiver entity (3) is modified by means of modification data (10).

10. The method of claim 9,
wherein the modification data (10) contains a modification key, wherein the stored authentication key (5) is XORed with the modification key for forming a new authentication key (5).

11. The method of claim 9,
wherein the modification data (10) is smaller than the authentication key (5), or smaller than N authentication keys (5), wherein the modification data (10) is input into an algorithm to generate expanded modification data (14).

12. A receiver entity (3) for secure execution of software (1), wherein the software (1) is executed in the receiver entity (3) conditionally, the receiver entity (3) comprising:
an authentication unit (31) for executing an authentication scheme (4) with a sender entity (2) using an authentication key (5) to select a hash function (6) from a hash function family (13),
a receiving unit (32) for receiving the software (1) and a first hash value (7) from the sender entity (2), wherein the first hash value (7) is calculated by inputting the software (1) into the selected hash function (6),
a storing unit (33) for storing the authentication key (5) and usage data (8) about the usage of the stored authentication key (5), wherein the usage data (8) is embodied as a counter or as a whitelist,
a processing unit (34) which is configured to update the usage data (8) with every usage of the stored authentication key (5), to mark the stored authentication key (5) as unusable or to delete the stored authentication key (5) when a to a certain threshold defined usage limit according to the updated usage data (8) is reached, to input the received software (1) into the selected hash function (6) to calculate a second hash value (9), and to execute the software (1) only if the first hash value (7) is equal to the second hash value (9),
wherein the received first hash value (7) is a respective individual first hash value (7) calculated individually for each of a plurality of receiver entities (3).

## Patentansprüche

1. Verfahren zur sicheren Ausführung von Software (1) auf einer Empfängerentität (3), wobei die Software (1) in der Empfängerentität (3) bedingt ausgeführt wird, wobei das Verfahren die folgenden Schritte auf der Empfängerentität (3) umfasst:
Ausführen (301) eines Authentifizierungsschemas (4) mit einer Senderentität (2) unter Verwendung eines Authentifizierungsschlüssels (5), um eine Hash-Funktion (6) aus einer Hashfunktions-Familie (13) auszuwählen,
Empfangen (302) der Software (1) und eines ersten Hashwertes (7) von der Senderentität (2), wobei der erste Hashwert (7) durch Eingeben der Software (1) in die ausgewählte Hash-Funktion (6) berechnet wird,
Speichern (303) des Authentifizierungsschlüssels (5) und von Nutzungsdaten (8) betreffend die Nutzung des gespeicherten Authentifizierungsschlüssels (5), wobei die Nutzungsdaten (8) als ein Zähler oder als eine Whitelist ausgebildet sind,
Aktualisieren (304) der Nutzungsdaten (8) bei jeder Nutzung des gespeicherten Authentifizierungsschlüssels (5),
Markieren (305) des gespeicherten Authentifizierungsschlüssels (5) als unbrauchbar oder Löschen des gespeicherten Authentifizierungsschlüssels (5), wenn eine zu einem bestimmten Schwellwert definierte Nutzungsgrenze entsprechend den aktualisierten Nutzungsdaten (8) erreicht ist,
Eingeben (306) der empfangenen Software (1) in die ausgewählte Hash-Funktion (6), um einen zweiten Hashwert (9) zu berechnen, und
Ausführen (307) der Software (1) nur, wenn der erste Hashwert (7) gleich dem zweiten Hashwert (9) ist,
wobei der empfangene erste Hashwert (7) ein jeweiliger individueller erster Hashwert (7) ist, der individuell für jede der mehreren Empfängerentitäten (3) berechnet wird.

2. Verfahren nach Anspruch 1,
wobei das Authentifizierungsschema (4) informationstheoretisch sicher ist.

3. Verfahren nach Anspruch 2,
wobei das Authentifizierungsschema (4) das Authentifizierungsschema von Wegman und Carter ist.

4. Verfahren nach einem der Ansprüche 1 bis 3,
wobei die Empfängerentität (3) ein Fahrzeug, insbesondere ein PKW, ein LKW, ein Flugzeug, ein Raumfahrzeug oder ein Wasserfahrzeug ist.

5. Verfahren nach einem der Ansprüche 1 bis 3,
wobei die Empfängerentität (3) ein Gerät, insbesondere ein mobiles Gerät oder ein sicherheitskritisches Gerät, insbesondere ein medizinisches Gerät, ist.

6. Verfahren nach einem der Ansprüche 1 bis 5,
wobei eine Menge von N Authentifizierungsschlüsseln (5) auf der Empfängerentität (3) in einem Produktionsprozess der Empfängerentität (3) gespeichert wird, mit N ≥ 1.

7. Verfahren nach Anspruch 6,
wobei die Menge von N Authentifizierungsschlüsseln (5) in einer sicheren Hardware gespeichert ist, wobei die sichere Hardware auf der Empfängerentität (3) installiert ist.

8. Verfahren nach einem der Ansprüche 1 bis 7,
wobei der Authentifizierungsschlüssel (5) durch White-Box-Kryptographie geschützt ist.

9. Verfahren nach einem der Ansprüche 1 bis 8,
wobei der in der Empfängerentität (3) gespeicherte Authentifizierungsschlüssel (5) mittels Modifikationsdaten (10) modifiziert wird.

10. Verfahren nach Anspruch 9,
wobei die Modifikationsdaten (10) einen Modifikationsschlüssel enthalten, wobei der gespeicherte Authentifizierungsschlüssel (5) mit dem Modifikationsschlüssel zur Bildung eines neuen Authentifizierungsschlüssels (5) XOR-verknüpft wird.

11. Verfahren nach Anspruch 9,
wobei die Modifikationsdaten (10) kleiner als der Authentifizierungsschlüssel (5) oder kleiner als N Authentifizierungsschlüssel (5) sind, wobei die Modifikationsdaten (10) in einen Algorithmus eingegeben werden, um erweiterte Modifikationsdaten (14) zu erzeugen.

12. Empfängerentität (3) zur sicheren Ausführung von Software (1), wobei die Software (1) in der Empfängerentität (3) bedingt ausgeführt wird, wobei die Empfängerentität (3) umfasst:
eine Authentifizierungseinheit (31) zum Ausführen eines Authentifizierungsschemas (4) mit einer Senderentität (2) unter Verwendung eines Authentifizierungsschlüssels (5), um eine Hash-Funktion (6) aus einer Hashfunktions-Familie (13) auszuwählen,
eine Empfangseinheit (32) zum Empfangen der Software (1) und eines ersten Hashwertes (7) von der Senderentität (2), wobei der erste Hashwert (7) durch Eingeben der Software (1) in die ausgewählte Hash-Funktion (6) berechnet wird,
eine Speichereinheit (33) zum Speichern des Authentifizierungsschlüssels (5) und von Nutzungsdaten (8) betreffend die Nutzung des gespeicherten Authentifizierungsschlüssels (5), wobei die Nutzungsdaten (8) als ein Zähler oder als eine Whitelist ausgebildet sind,
eine Verarbeitungseinheit (34), die dazu eingerichtet ist, die Nutzungsdaten (8) bei jeder Nutzung des gespeicherten Authentifizierungsschlüssels (5) zu aktualisieren, den gespeicherten Authentifizierungsschlüssel (5) als unbrauchbar zu markieren oder den gespeicherten Authentifizierungsschlüssel (5) zu löschen, wenn eine zu einem bestimmten Schwellwert definierte Nutzungsgrenze entsprechend den aktualisierten Nutzungsdaten (8) erreicht ist, die empfangene Software (1) in die ausgewählte Hash-Funktion (6) einzugeben, um einen zweiten Hashwert (9) zu berechnen, und die Software (1) nur auszuführen, wenn der erste Hashwert (7) gleich dem zweiten Hashwert (9) ist,
wobei der empfangene erste Hashwert (7) ein jeweiliger individueller erster Hashwert (7) ist, der individuell für jede der mehreren Empfängerentitäten (3) berechnet wird.

## Revendications

1. Procédé pour l'exécution sécurisée d'un logiciel (1) dans une unité de réception (3), dans lequel le logiciel (1) est exécuté dans l'unité de réception (3) conditionnellement, le procédé comprenant les étapes suivantes dans l'unité de réception (3) :
l'exécution (301) d'un schéma d'authentification (4) avec une unité d'envoi (2) en utilisant une clé d'authentification (5) pour sélectionner une fonction de hachage (6) parmi une famille de fonctions de hachage (13),
la réception (302) du logiciel (1) et d'une première valeur de hachage (7) de l'unité d'envoi (2), dans lequel la première valeur de hachage (7) est calculée en entrant le logiciel (1) dans la fonction de hachage (6) sélectionnée,
le stockage (303) de la clé d'authentification (5) et de données d'utilisation (8) sur l'utilisation de la clé d'authentification (5) stockée, dans lequel les données d'utilisation (8) sont incorporées dans un compteur ou une liste blanche,
la mise à jour (304) des données d'utilisation (8) avec chaque utilisation de la clé d'authentification (5),
le marquage (305) de la clé d'authentification (5) stockée comme étant inutilisable ou la suppression de la clé d'authentification (5) stockée lorsqu'une limite d'utilisation définie avec un seuil déterminé selon les données d'utilisation mises à jour est atteinte,
l'entrée (306) du logiciel (1) reçu dans la fonction de hachage (6) sélectionnée pour calculer une seconde valeur de hachage (9), et
l'exécution (307) du logiciel (1) uniquement si la première valeur de hachage (7) est égale à la seconde valeur de hachage (9),
dans lequel la première valeur de hachage (7) est un première valeur de hachage (7) individuelle respective calculée pour chacune de plusieurs unités de réception (3).

2. Procédé selon la revendication 1,
dans lequel le schéma d'authentification (4) est sécurisé théoriquement pour l'information.

3. Procédé selon la revendication 2,
dans lequel le schéma d'authentification (4) est le schéma d'authentification de Wegman et Carter.

4. Procédé selon l'une des revendications 1 à 3,
dans lequel l'unité de réception (3) est un véhicule, en particulier une voiture, un camion, un avion, un vaisseau spatial ou une embarcation.

5. Procédé selon l'une des revendications 1 à 3,
dans lequel l'unité de réception (3) est un dispositif, en particulier un dispositif mobile ou un dispositif essentiel à la sécurité, en particulier un dispositif médical.

6. Procédé selon l'une des revendications 1 à 5,
dans lequel un ensemble de N clés d'authentification (5) est stocké dans l'unité de réception dans un processus de production de l'unité de réception (3), avec N ≥ 1.

7. Procédé selon la revendication 6,
dans lequel l'ensemble des N clés d'authentification (5) est stocké dans un hardware sécurisé, dans lequel le hardware sécurisé est installé dans l'unité de réception (3).

8. Procédé selon l'une des revendications 1 à 7,
dans lequel la clé d'authentification (5) est protégée par cryptographie en boîte blanche.

9. Procédé selon l'une des revendications 1 à 8,
dans lequel la clé d'authentification (5) stockée dans l'unité de réception (3) est modifiée par le moyen de données de modification (10).

10. Procédé selon la revendication 9,
dans lequel les données de modification (10) contiennent une clé de modification, dans lequel la clé d'authentification (5) stockée est traitée par une fonction XOR avec la clé de modification afin de former une nouvelle clé d'authentification (5).

11. Procédé selon la revendication 9,
dans lequel les données de modification (10) sont plus petites que la clé d'authentification (5) ou plus petites que N clés d'authentification (5), dans lequel les données de modification (10) sont entrées dans un algorithme pour générer des données de modification étendues (14).

12. Unité de réception (3) pour l'exécution sécurisée d'un logiciel (1), dans lequel le logiciel (1) est exécuté dans l'unité de réception (3) conditionnellement, l'unité de réception (3) comprenant :
une unité d'authentification (31) pour l'exécution d'un schéma d'authentification (4) avec une unité d'envoi (2) en utilisant une clé d'authentification (5) pour sélectionner une fonction de hachage (6) parmi une famille de fonctions de hachage (13),
une unité de réception (32) pour la réception du logiciel (1) et d'une première valeur de hachage (7) de l'unité d'envoi (2), dans lequel la première valeur de hachage (7) est calculée en entrant le logiciel (1) dans la fonction de hachage (6) sélectionnée,
une unité de stockage (33) pour le stockage de la clé d'authentification (5) et de données d'utilisation (8) sur l'utilisation de la clé d'authentification (5) stockée, dans lequel les données d'utilisation (8) sont incorporées dans un compteur ou une liste blanche,
une unité de traitement (34) pour la mise à jour des données d'utilisation (8) avec chaque utilisation de la clé d'authentification (5), pour le marquage de la clé d'authentification (5) stockée comme étant inutilisable ou la suppression de la clé d'authentification (5) stockée lorsqu'une limite d'utilisation définie avec un seuil déterminé selon les données d'utilisation mises à jour est atteinte, pour l'entrée du logiciel (1) reçu dans la fonction de hachage (6) sélectionnée pour calculer une seconde valeur de hachage (9), et pour l'exécution du logiciel (1) uniquement si la première valeur de hachage (7) est égale à la seconde valeur de hachage (9),
dans lequel la première valeur de hachage (7) est un première valeur de hachage (7) individuelle respective calculée pour chacune de plusieurs unités de réception (3).
